# EUROPEAN PATENT SPECIFICATION

(11) **EP 0 775 254 B1**
(45) Date of publication and mention of the grant of the patent: **27.09.2000**
(21) Application number: 94921879.6
(22) Date of filing: 11.07.1994
(51) Int. Cl.: F02B 43/08

(54) **POWER-PLANT AND A METHOD FOR ITS OPERATION**
KRAFTANLAGE UND VERFAHREN ZUM BETRIEB
CENTRALE DE FORCE MOTRICE ET PROCEDE DE FONCTIONNEMENT

(30) Priority: 14.07.1993 SE 9302417
(43) Date of publication of application: 28.05.1997
(73) Proprietor: POWERMAN AB, S-612 46 Finspang (SE)
(72) Inventor: HANSSON, Hans-Erik, S-612 46 Finspang (SE)
(74) Representative: Nilsson, Karl Ingvar
(86) International application number: SE9400687
(87) International publication number: WO9502757

(56) References cited:
- EP-A- 0 177 930
- FR-A- 584 194
- FR-A- 2 541 722

## Description

The present invention relates to a power plant of the kind defined in the preamble of claim 1. The invention also relates to a method for operating such a power plant, defined in the preamble of claim 1.

It has long been known to use producer gas as fuel in slightly modified internal combustion engines, both carburetor engines and direct injection engines. Producer-gas engine operation, however, has chiefly been considered a second-hand alternative for use when embargoes or restrictions are placed on commerce, or when the price of imported liquid engine fuels is extremely high. One of the reasons for this is that producer-gas fueling is associated with certain handling difficulties and health hazards. Furthermore, only low volumetric capacities have been achieved in the engines, resulting in power losses in the order of 40-50%. Despite producer-gas being a domestic and relatively inexpensive fuel, it has not been considered competitive with imported driver fuels in peacetime, for the aforesaid reasons.

The object of the present invention is to improve a power plant and method of the aforedefined kind so as to enable the volumetric capacity and power output per unit of engine volume to be increased when using producer gas as a fuel.

The object is achieved by the plant defined in claim 1 and by the method defined in claim 2. Embodiments are defined in dependent claims 2-5.

A power plant of the kind concerned will include means for compressing the producer gas and air individually prior to their being mixed and delivered to the engine. This enables good volumetric capacities and therewith high power outputs to be obtained from the engine used, without the risk of explosion that would occur if the air of combustion and producer gas were to be compressed in mixture. The motor for compressing the air and the producer gas separately advantageously includes two turbo-chargers which may be driven by the engine exhaust gases in a known way. With the intention of controlling gas temperature and air temperature and of further increasing the volumetric capacity of the engine, the power plant includes a gas cooler for cooling the producer gas and/or the air. The cooler or coolers may be constructed to operate with water supplied directly to the producer gas and/or the air. This results in a steam-rich producer gas/combustion-air mixture which has a lower knocking tendency and can therewith be delivered to the engine at a higher pressure and also at a higher temperature than a corresponding dry gas mixture.

As before mentioned, the invention also relates to a method for operating a power plant of the aforedescribed kind, wherein the method comprises compressing the producer gas and the air separately, each per se, and then mixing the producer gas and air, preferably immediately prior to their delivery to the engine. The separate compression of the producer gas and the air of combustion is effected in turbo-chargers. The producer-gas pressure and the air pressure may advantageously be increased in the turbo-chargers by as much as 100%. The combustion air and/or the producer gas is cooled prior to delivery to the engine, by vaporizing water in the air and/or in the producer gas. According to one particularly preferred embodiment of the method, the producer gas, however, is maintained at a temperature which exceeds the temperature at which its tar content condenses during its passage from the gas generator to the engine, thereby obtaining a producer gas which is richer in energy.

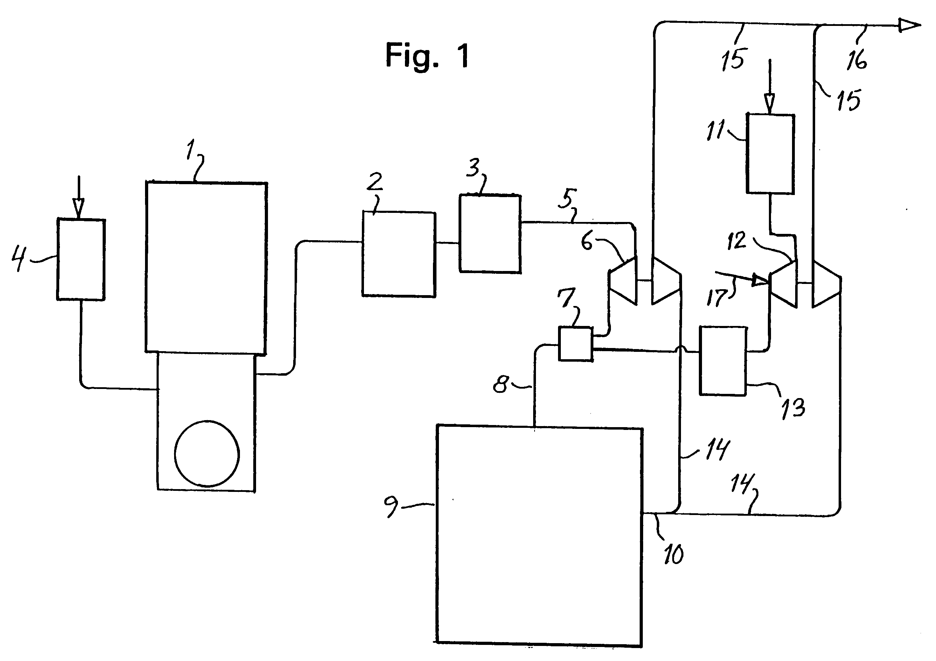

The invention will now be described in more detail with reference to an exemplifying embodiment of an inventive power plant illustrated schematically in the accompanying drawing.

The drawing illustrates a producer-gas generating arrangement, which includes a gas generator 1, a cleaner 2 and a gas cooler 3. The gas generator 1 may be of a conventional kind and is intended to work with dry wood-chips. Air for incomplete combustion of the generator charge is delivered to the generator via an air cleaner 4. Solids that accompany the generated producer gas are extracted in the cleaner 2 and the temperature of the solids-free producer gas is adjusted to a desired level in the gas cooler 3. The producer gas is conducted through conduit means 5 to a mixer 7, via a gas-compression means constructed as a turbo-charger 6. The mixer 7 is mounted adjacent the intake pipe 8 of an internal combustion engine 9 driven by the producer gas and provided with an exhaust pipe 10. The producer gas is mixed in the mixer 7 with combustion air which is delivered to the mixer 7 via an air purifier 11, a compression means constructed as a turbo-charger 12, and air-charge cooling means 13. Although not shown, the mixer 7 is provided with throttle valves or like devices for controlling the flow of incoming gases and departing gas. As will be seen from the drawing, the two turbo-chargers 6, 12 are both driven by the engine exhaust gases passing through the conduits 10, 14, these gases finally departing through the conduits 15, 16.

When the two gases are compressed together, the temperature of the gas is raised to such an extent as to create a risk of the gases exploding. This risk is avoided when using a respective separate turbo-charger for the producer gas and the air. The gases can also be compressed to different high degrees of compression when applying this method. The gases can also be cooled to mutually different extents in the coolers 3 and 13. For instance, it may be desirable to cool the air charge to a lower temperature than the producer gas, so as to avoid condensation of the heavier hydrocarbons, such as tar-like impurities, from the producer gas on its way to the mixer 7. However, the compressed producer gas may also be cooled slightly between the turbo charger 6 and the mixer 7. It is also possible to cool hotter producer gas, either indirectly or directly, in the mixer 7 with colder air to obtain a fuel gas mixture whose temperature is optimal for delivery to the engine 9. Several advantages are gained when the producer gas and the air are cooled by water injection. For instance, the temperature in the engine 9 is lowered, wherein an optimal, stoichiometric ratio can be chosen between producer gas and air, resulting in lower exhaust emission levels (primarily NOₓ levels), higher specific power outputs and a reduced knocking risk, among other things.

The invention is not restricted to the described and illustrated exemplifying embodiment thereof, but can be put into practice in any manner which lies within the scope of the inventive concept as defined in the following Claims. For instance, the air-charge cooler 13 can be supplemented or replaced with means for injecting water into the air, preferably in conjunction with the compression step, as indicated by the arrow 17. Correspondingly, the producer-gas cooler 3 can be supplemented or replaced with some other producer-gas cooling means, e.g. with means for injecting water into the gas or by finally mixing non-cooled or slightly cooled producer gas with air that has been cooled to a greater extent.

## Claims

1. A power plant which includes a producer-gas generator (1), an internal combustion engine (9), means (7, 8) for mixing and conducting air and generated producer gas to the engine, and means (6, 12) driven by said engine for compressing the producer gas and the air separately and individually prior to mixing said gases and delivering them to the engine, said means for the separate compression of the air and the producer gas including two turbo-chargers (6, 12), characterized in that it includes a gas cooler (3, 13) which acts by adding water to the producer gas and/or the air.

2. A method for operating a power plant which includes a producer-gas generator (1), an internal combustion engine (9), means (7, 8) for coducting air and generated producer gas to the engine, and means (6, 12) driven by the engine for compressing the producer gas and the air separately and individually prior to mixing said gases and delivering them to the engine, comprising effecting the separate compression of the producer gas and the air in a respective turbo-charger (6, 12), characterized by cooling the air and/or the producer gas prior to delivery to the engine (9) by evaporating water added to the air and/or the gas.

3. A method according to Claim 2, characterized by increasing the gas pressure by about 100% in said compression step.

4. A method according to Claim 2 or 3, characterized by maintaining the producer gas during its passage from the generator (1) to the engine (9) at a temperature which exceeds the temperature at which the tar content of the gas condenses.

5. A method according to any one of Claims 2-4, characterized by cooling the air to a temperature beneath the temperature of the producer gas prior to mixing the former with the latter.

## Patentansprüche

1. Kraftwerk mit einem Gasgenerator, einer inneren Verbrennungsmaschine (9), Mitteln (7, 8) zum Mischen und Zuleiten von Luft und dem erzeugten Generatorgas in die Maschine, und durch diese Maschine angetriebene Vorrichtungen (6, 12), die das Generatorgas und die Luft einzeln und getrennt voneinander vor dem Mischen besagter Gase verdichten und diese der Maschine zuleiten, wobei besagte Vorrichtungen für die getrennte Verdichtung der Luft und des Generatorgases zwei Turbo-Lader aufweisen (6, 12), dadurch gekennzeichnet, daß es einen Gaskühler (3, 13) aufweist, der dem Generatorgas und/oder der Luft Wasser hinzufügt.

2. Verfahren zum Betrieb eines Kraftwerks, mit einem Gasgenerator (1), einer inneren Verbrennungsmaschine (9), Mitteln (7, 8) zum Zuleiten von Luft und dem erzeugten Generatorgas in die Maschine und durch diese Maschine angetriebene Vorrichtungen (6, 12), die das Generatorgas und die Luft einzeln und getrennt voneinander vor dem Mischen besagter Gase verdichten und diese der Maschine zuleiten, wobei die getrennte Verdichtung des Generatorgases und der Luft in einem entsprechenden Turbolader (6, 12) bewirkt wird, gekennzeichnet durch eine Kühlung der Luft und/oder des Generatorgases durch Verdunstung von der Luft oder dem Generatorgas hinzugefügtem Wasser vor der Zuleitung in die Maschine (9).

3. Verfahren nach Anspruch 2, gekennzeichnet durch eine Erhöhung des Gasdrucks in der besagen Verdichtungsstufe um etwa 100 %.

4. Verfahren nach Anspruch 2 oder 3, dadurch gekennzeichnet, daß das Generatorgas während seines Durchaufs vom Generator (1) zur Maschine (9) auf eine Temperatur gehalten wird, die die Temperatur überschreitet, bei der die Teerbestandteile des Gases kondensieren.

5. Verfahren nach einem der Ansprüche 2 bis 4, gekennzeichnet durch eine Kühlung der Luft auf eine Temperatur unter der Temperatur des Generatorgases vor dem Vermischen des ersteren mit dem letzteren.

## Revendications

1. Une centrale de force motrice qui comprend un générateur (1) de gaz de gazogène, un moteur à combustion interne (9), des moyens (7, 8) pour mélanger et conduire vers le moteur à combustion de l'air et le gaz et le gazogène généré, et des moyens (6, 12) actionnés par ledit moteur à combustion pour comprimer le gaz de gaz de gazogène et l'air, séparément et individuellement, avant de mélanger lesdits gaz et de les fournir au moteur à combustion, lesdits moyens pour la compression séparés de l'air et du gaz de gaz de gazogène comprenant deux turbo-compresseurs de suralimentation (6, 12), caractérisée en ce qu'elle comporte un réfrigérant de gaz (3, 13) qui agit en ajoutant de l'eau au gaz de gazogène et/ou à l'air.

2. Un procédé pour faire fonctionner une centrale de force motrice qui comporte un générateur (1) de gaz de gazogène, un moteur à combustion interne (9), des moyens (7, 8) pour coconduire vers le moteur de l'air et le gaz de gazogène généré, et des moyens (6, 12) actionnés par le moteur à combustion pour comprimer le gaz de gazogène et l'air, séparément et individuellement, avant de mélanger lesdits gaz et de les fournir au moteur à combustion, procédé comprenant l'étape consistant à effectuer la compression séparée du gaz de gazogène et de l'air dans un turbo-compresseur de suralimentation respectif (6, 12), caractérisé en ce qu'on refroidit l'air et/ou le gaz de gazogène avant de les fournir au moteur à combustion (9) en faisant évaporer de l'eau ajoutée à l'air et/ou au gaz.

3. Un procédé selon la revendication 2, caractérisé en ce qu'on augmente la pression du gaz d'environ 100% dans ladite étape de compression.

4. Un procédé selon la revendication 2 ou 3, caractérisé en ce qu'on maintient le gaz de gazogène pendant son passage du générateur (1) vers le moteur à combustion (9) à une température qui dépasse la température à laquelle le goudron contenu dans le gaz se condense.

5. Un procédé selon l'une quelconque des revendications 2 à 4, caractérisé en ce qu'on refroidit l'air à une température inférieure à la température du gaz de gazogène avant de mélanger le premier avec le dernier.
